## Europäisches Patentamt

## European Patent Office

## Office européen des brevets

(19)

(11) Veröffentlichungsnummer : **0 340 833 B1**

(12)

# EUROPÄISCHE PATENTSCHRIFT

(45) Veröffentlichungstag der Patentschrift :
**02.09.92 Patentblatt 92/36**

(51) Int. Cl.⁵ : **B64G 7/00,** G05D 13/62

(21) Anmeldenummer : **89201021.6**

(22) Anmeldetag : **20.04.89**

(54) **Verfahren und Vorrichtung zur Beschleunigung von Prüflingen auf einer Kreisbahn sowie Verwendung der Vorrichtung.**

(30) Priorität : **06.05.88 CH 1716/88**

(43) Veröffentlichungstag der Anmeldung :
**08.11.89 Patentblatt 89/45**

(45) Bekanntmachung des Hinweises auf die
Patenterteilung :
**02.09.92 Patentblatt 92/36**

(84) Benannte Vertragsstaaten :
**AT BE CH DE ES FR GB GR IT LI LU NL SE**

(56) Entgegenhaltungen :
**FR-A- 1 422 892**
**US-A- 3 267 768**

(73) Patentinhaber : **Schweizerische
Eidgenossenschaft vertreten durch das
Eidgenössisches Flugzeugwerk Emmen der
Gruppe für Rüstungsdienste
CH-6032 Emmen (CH)**

(72) Erfinder : **Monkewitz, Martin, Dr.
Felsbergstrasse 6
CH-6006 Luzern (CH)**
Erfinder : **Oppliger, Erich
Schützenstrasse 16
CH-3627 Heimberg (CH)**

(74) Vertreter : **Frauenknecht, Alois J.
c/o PPS Polyvalent Patent Service AG,
Mellingerstrasse 1
CH-5400 Baden (CH)**

EP 0 340 833 B1

# EP 0 340 833 B1

## Beschreibung

Die vorliegende Erfindung bezieht sich auf ein Verfahren zum kontrollierten Aufbau einer vorgegebenen Beschleunigung an einem Prüfling auf einer Kreisbahn, wobei die Beschleunigungsrichtung zumindest während der Anfahrphase bezüglich des Prüflings konstant gehalten wird, und bezieht sich zudem auf eine Vorrichtung zur Beschleunigung eines Prüflings auf einer Kreisbahn mit einem Rotor, an dem ein Objektträger zur Aufnahme des Prüflings befestigt ist, mit Antriebsmitteln zum Drehen des Rotors sowie eine Verwendung der Vorrichtung.

Ein Verfahren und eine Vorrichtung obengenannter Art sind aus US-A-3 267 768 (K.C. Drome et al) bekannt.

Zur Erhöhung der Systemsicherheit und zur Gewinnung weiterer technischer Erkenntnisse werden heute eine Vielzahl von Apparaten, Instrumenten und Installationen vor ihrem Einsatz einer Beschleunigungsprüfung unterzogen oder es werden auch nach statistischen Gesichtspunkten aus der Serienfabrikation ausgewählte Objekte bis zur Zerstörung einem Versuchsbetrieb unterzogen.

In diesem Zusammenhang stellt sich oft das Problem, hohe impulsartige Beschleunigungsanstiege zu erzielen und anschliessend einen stationären Betrieb bei konstanter Beschleunigung über ein längeres Zeitintervall aufrecht zu erhalten. Zu diesem Zweck wurden Linearbeschleunigungsanlagen entwickelt, welche meist einen grossen Raumbedarf und hohe Investitionskosten erfordern.

Es ist daher Aufgabe der Erfindung, diese Nachteile durch eine Prüfung auf einer Kreisbahn zu beseitigen und ein Verfahren zu schaffen, welches erlaubt, Prüflinge stetig und/oder impulsartig zu beschleunigen und anschliessend beliebig lange einem stationären Betrieb bei konstanter oder geringfügig ändernder Beschleunigung auszusetzen. Während des gesamten Ablaufs von vorgewählten Prüfprogrammen sollen am Prüfling physikalische Messungen und dessen Betrieb unter vorgebenen Bedingungen möglich sein.

Im weiteren soll eine Vorrichtung geschaffen werden, die mit wirtschaftlichem Aufwand realisiert, betrieben und auch für spezielle Aufgaben, wie Aufprallversuche etc., verwendet werden kann.

Erfindungsgemäss wird dies durch ein Verfahren obengenannten Art erzielt, wobei der Prüfling im Bereich seines Beschleunigungszentrums um wenigstens 90 Grad, senkrecht zur Tangentialrichtung seiner Kreisbahn, gedreht wird und dass zu Beginn der Anfahrphase der Drehbewegung in der Kreisbahn der Prüfling in seiner Längsachse tangential zur Kreisbahn ausgerichtet wird und dass während der Anfahrphase der Prüfling mit seiner Längsachse gegen den Mittelpunkt der Kreisbahn gedreht wird und dass dieser Prüfling nach einem vorgegebenen Rotationswinkel ( $\phi$ ) auf der Kreisbahn mit seiner Längsachse radial zum Mittelpunkt der Kreisbahn ausgerichtet wird und in dieser Lage eine stationäre Drehphase erfährt.

Erfindungsgemäss wird dies erzielt durch eine Vorrichtung obengenannter Art mit den Merkmalen des kennzeichnenden Teils des Anspruchs 4.

Der im Anspruch 1 verwendete Begriff eines Beschleunigungszentrums ist bei den meisten Prüflingen identisch mit deren Massenschwerpunkt. Allgemein betrachtet ist dies jedoch der Punkt, an dem der vorgegebene Beschleunigungsvektor angreifen soll, oder durch den dieser beim Prüfvorgang wirken soll.

Die Lehre nach Anspruch 1 lässt sich für an sich beliebige Beschleunigungsabläufe anwenden, wobei der Drehwinkel des Prüflings jeweils anhand der Beschleunigungsform berechenbar ist. Im Gegensatz zu Verfahren mittels linearen Beschleunigungsvorrichtungen erlaubt die Kreisbahn, beliebig lang andauernde stationäre Beschleunigungswerte am Prüfling zu realisieren. Ein einmal auf einen bestimmten Wert beschleunigter Körper lässt sich, falls gewünscht, in analoger Weise abbremsen, so dass bei geeigneter Auslegung einer Anlage wirklichkeitsnahe Prüfprogramme realisierbar sind.

Das Verfahren nach Anspruch 2 ergibt optimale kinetische Verhältnisse am Prüfling.

Anspruch 3 nennt die mathematischen Beziehungen, welche zur Drehung des Prüflings vorteilhaft sind.

Hervorragend bewährt hat sich die Vorrichtung gemäss Anspruch 4 zum Antrieb des Rotors in der Anfahrphase und zur wegabhängigen Drehung des Prüflings.

Durch den Einbezug einer Wippe, gemäss Anspruch 5, erfolgt eine Untersetzung des Rotationswinkels des Rotors und damit eine entsprechende Erhöhung des Beschleunigungsanstiegs am Prüfling.

Die Vorrichtung nach Anspruch 6 erlaubt, den stationären Betrieb beliebig lange auszudehnen. Es können pneumatische oder hydraulische Medien angesetzt werden, die über Druckkolben und Stangen oder Hebel wirksam sind.

Vorzugsweise erfolgt zwischen dem Elektromotor und dem Rotor, entsprechend Anspruch 7, die Zwischenschaltung eines Zahnriemens. Dies erlaubt in einfachster Weise eine Untersetzung und damit eine Anpassung der Rotationsgeschwindigkeit des Rotors.

Bevorzugterweise wird die Steuerkurve zur Drehung des Prüflings im letzten Drittel der Rotorlänge angeordnet, vgl. Anspruch 8.

Der Anspruch 9 gibt vorteilhafte Verwendungen der Erfindung an.

Bewährt hat sich die Vorrichtung insbesondere zur Prüfung von Raketenspitzen (Anspruch 10), welche samt ihrer Steuerelektronik und Zündkette, inkl. Kriegskopf, gefahrlos testbar sind.

Nachfolgend werden anhand von Zeichnungen Ausführungsbeispiele des Erfindungsgegenstands näher beschrieben. Gleiche Teile sind in allen Zeichnungen mit denselben Bezugszeichen versehen.

Es zeigen:

Fig. 1 eine schematische Darstellung einer Prüfeinrichtung mit schwenkbar angeordnetem Prüfling,

Fig. 2 die Einrichtung gemäss Fig. 1 in einer detaillierten Darstellung,

Fig. 3 weitere Einzelheiten des Antriebs der Prüfeinrichtung,

Fig. 4 die konstruktive Ausgestaltung der Prüflingsdrehung mittels eines Schlepphebels,

Fig. 5 eine Detaildarstellung der Führung des Schlepphebels und

Fig. 6 den charakteristischen Beschleunigungsverlauf, gemessen am Prüfling.

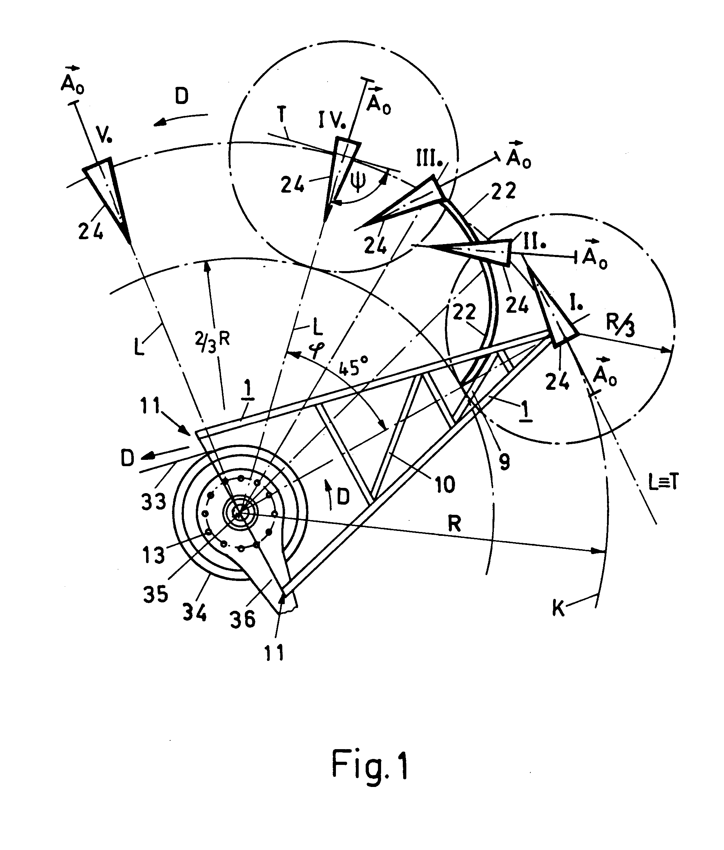

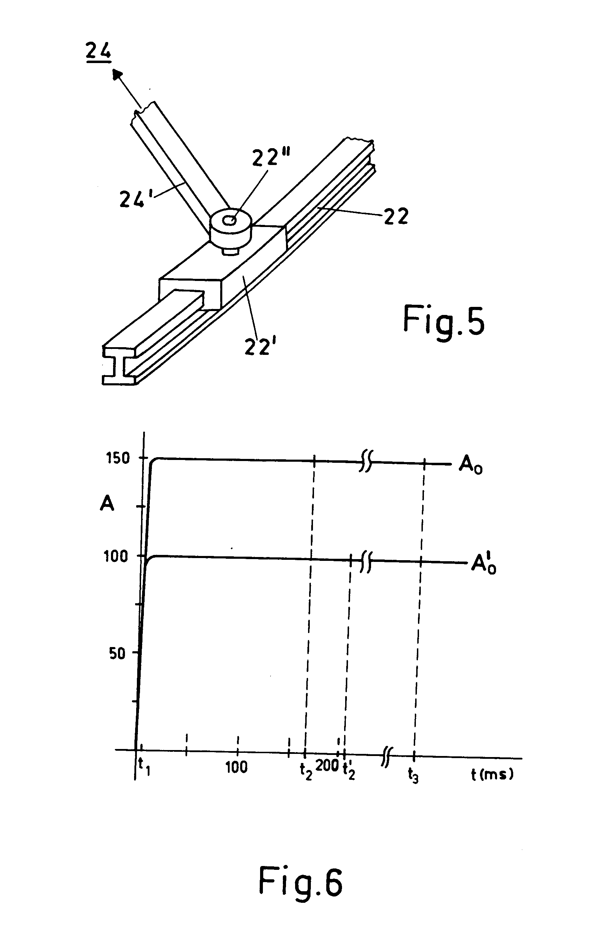

Gemäss Figur 1 ist mit 1 ein - vereinfacht dargestellter Rotor bezeichnet. Der Rotor ist mit Versteifungen 9 und 10 versehen und trägt auf seiner periphären Spitze einen Prüfling 24, welcher in seiner Startposition I. senkrecht zum Radius R des Rotors 1 ausgerichtet und in seinem Beschleunigungszentrum drehbar gelagert ist. Erfährt nun der Prüfling 24 eine durch eine Drehung des Rotors 1 plötzlich einsetzende Beschleunigung $A_0$ (= Sollbeschleunigung), vgl. Fig. 6, so wirkt eine am Beschleunigungszentrum, d.h. im Massenschwerpunkt des Prüflings 24, angreifende, rasch anwachsende Komponente der resultierenden Zentripetalbeschleunigung auf diesen Prüfling 24. Um den Betrag des am Prüfling 24 in seiner üblichen Beschleunigungsrichtung z.B. Längsachse L wirkenden Beschleunigungsvektor $A_0$ konstant zu halten, wird der Prüfling 24 entsprechend den Positionen II. III. IV. so gedreht, dass die Beschleunigungsrichtung immer in die Richtung der Prüflingsachse zeigt. Hierzu wird die Drehung bei entsprechend abnehmender Winkelbeschleunigung über eine Steuerkurve 22 gesteuert. Diese Anfahrphase ist unabhängig von der Höhe der Beschleunigung $A_0$ und erstreckt sich immer über einen Zentriwinkel $\phi = 45° = \pi/4$. Am Ende der Anfahrphase, Pos. IV. und dann auch in der Phase V., bei konstanter Beschleunigung, im stationären Betrieb des Rotors 1 bleibt der Prüfling 24 in radialer Richtung orientiert und zum Beispiel mechanisch fixiert.

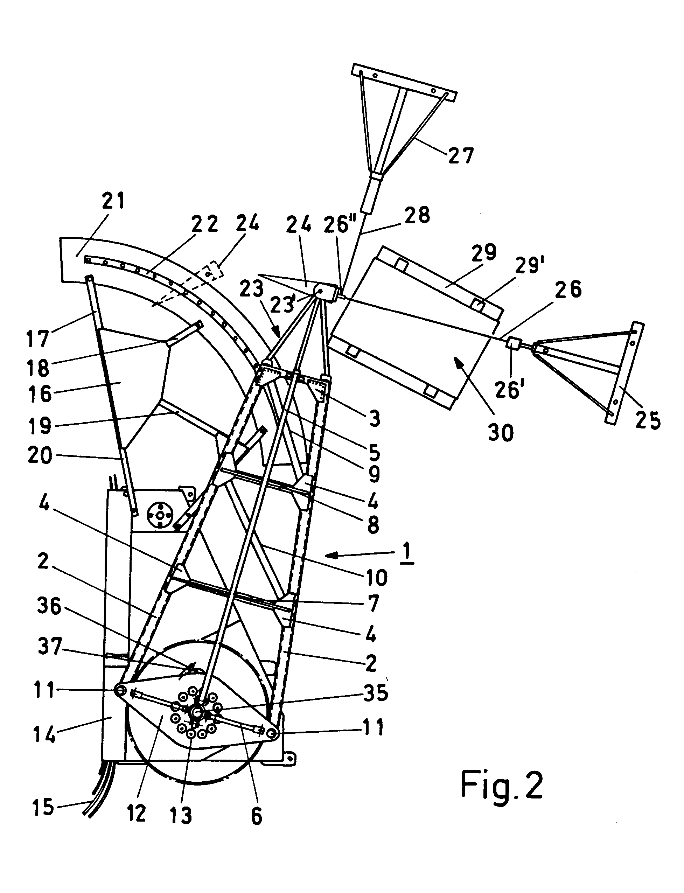

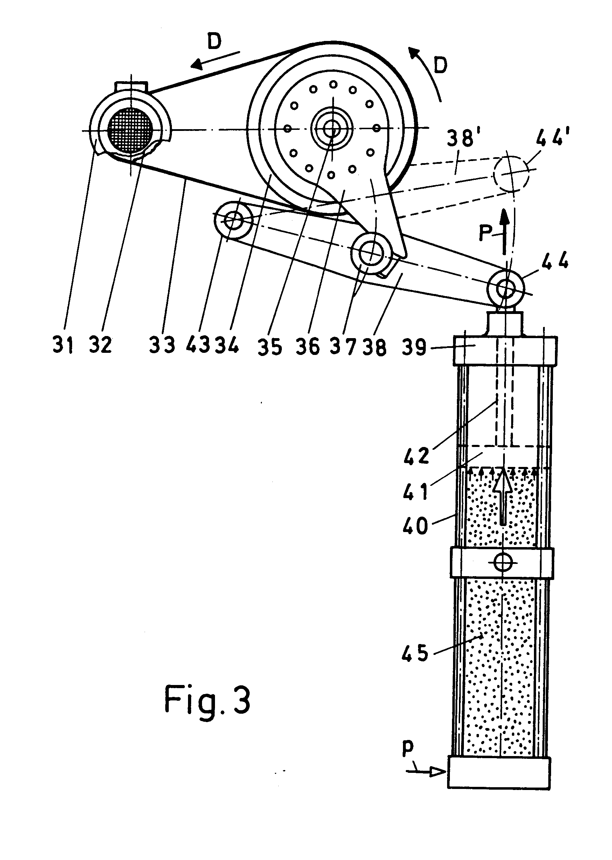

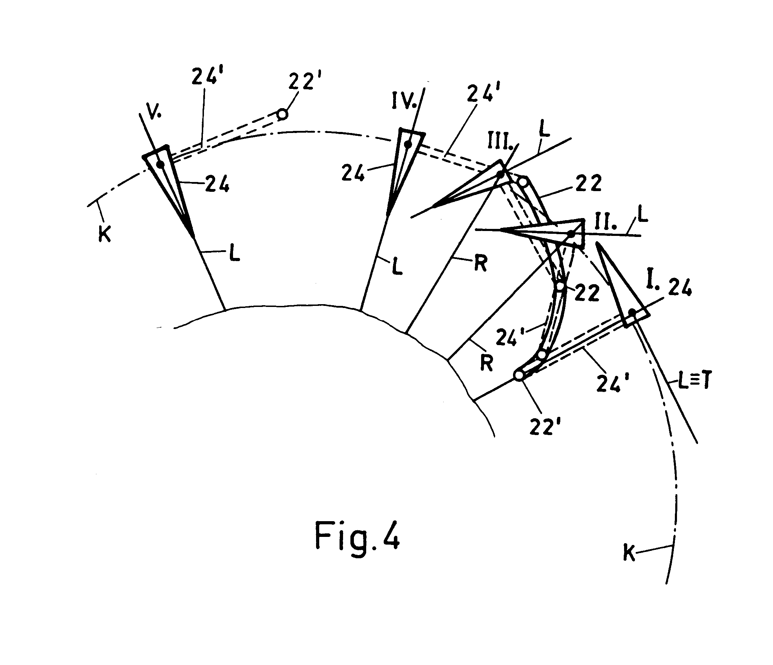

Der Rotor 1 ist mit zwei Bolzen 11 auf einem, auf einer Hauptwelle 35 gelagerten Support 12 (Fig. 2) befestigt, der über Mitnehmerschrauben 13 mit einer hebelartig ausgebildeten Kurvenscheibe 36 kraftschlüssig verbunden ist. Die Kurvenscheibe 36 ihrerseits ist mit einer Zahnscheibe 34 verbunden (siehe auch Fig. 3), auf welcher formschlüssig ein in der Drehrichtung D bewegter Zahnriemen 33 aufliegt. Die Drehung des Prüflings 24 um die erforderlichen 90° erfolgt mittels einer Steuerkurve 22 kontinuierlich. An dieser Steuerkurve 22 ist ein Schlepphebel 24′ mit Hilfe eines Gleitschuhes 22′ (vgl. Fig. 4 und Fig. 5) geführt.

In seiner Stellung in Radialrichtung zur Kreisbahn ist der Prüfling 24 eingeklinkt und damit fixiert. Die Steuerkurve 22 ist über R/3, d.h. ein Drittel des Radius R der Kreisbahn wirksam.

Die Systemgrundlagen bei einer Drehung des Rotors 1 um den Winkel $\phi$ in Funktion der Zeit ergeben sich aus folgenden mathematischen Beziehungen:

$$(1)\ A_t = R \cdot \dot{\omega}$$
$$(2)\ A_r = R \cdot \omega^2$$
$$(3)\ A = A_0 = R \sqrt{\omega^4 + \dot{\omega}^2}$$

wobei gilt:

$\vec{A}$ = Beschleunigungsvektor auf den Massenschwerschwerpunkt des Prüflings wirkend

$A$ = Betrag von $\vec{A}$

$A_t$ = Tangentialkomponente von $\vec{A}$

$A_r$ = Radialkomponente von $\vec{A}$

$\omega$ = Winkelgeschwindigkeit des Prüflings auf der Kreisbahn = "Zentrifugengeschwindigkeit"

$\dot{\omega}$ = Beschleunigung des Prüflings = "Zentrifugenbeschleunigung"

Daraus folgt, unter Einbezug der Anfangsbedingungen:

$$\dot{\omega} = \pm \sqrt{A_0^2 - \omega^4}$$

was sich in

$$\dot{\omega} = A_0 \cos 2\phi$$

umformen lässt.

Die Drehung des Prüflings kann nun wie folgt bestimmt werden:

$$\psi = \text{arc tan} \left(\frac{A_r}{A_t}\right) = \text{arc tan} \left(\frac{R\ A_o\ \sin 2\phi}{R\ A_o\ \cos\phi}\right) = 2\ \phi$$

Dies bedeutet, dass die gesamte Anfahrphase der Prüfeinrichtung nach einer Drehung des Rotors 1 um 45° abgeschlossen ist. In dieser Phase wurde der Prüfling um 90°, d.h. von der Tangentialrichtung in die Radialrichtung der Kreisbahn K gedreht.

Die in Fig. 2 dargestellte Prüfeinrichtung dient der realistischen Simulation von Lenkwaffen-Abschüssen. Hier ist wiederum der aus Fig. 1 bekannte Rotor 1 ersichtlich, welcher aus einem Tragrahmen 2 mit Knotenblechen 3,4 mit Versteifungen 9,10 sowie einer Längsstrebe 5 mit Querstreben 6,7 und 8 besteht. Der Rotor 1 ist mittels zwei Bolzen 11 auf seiner Basisseite auf dem Support 12 befestigt. Ebenso sind Mitnehmerschrauben 13 ersichtlich, welche den Support 12 mit der darunterliegenden Kurvenscheibe 36 verbinden.

Ein Maschinengestell 14 enthält das Antriebsaggregat. Zu diesem führen sämtliche notwendigen Steuer- und Speiseanschlüsse 15. Über eine Trägerplatte 16 mit Streben 17,18,19 und 20 ist ein Trägersegment 21 mit dem Maschinengestell 14 verschraubt. Dieses Trägersegment 21 weist auf seiner oberen Seite eine Steuerkurve 22 auf und dient der Drehung des Prüflings 24. Endseitig des Rotors 1 ist ein aus leicht abscherbarem Aluminium aufgebauter Objektträger 23 ersichtlich, welcher den Prüfling 24 in einem Gelenk 23' schwenkbar lagert. Am Objektträger 23 ist ein Zugseil 26 und ein Auslöseseil 28 befestigt, welche ihrerseits zu Seilverankerungen 25 bzw. 27 führen. Das Zugseil 26 ist durch den Detonationsraum 30, die Bohrung, eines Schutzrohrs 29 mit Armierung 29' geführt.

Das Maschinengestell 14 sowie die Trägerplatte 16 sind auf dem Boden eines sogenannten Sprengbunkers fixiert und abgestützt.

In der Fig. 3 ist der Antrieb des Rotors 1 näher ersichtlich. Auf der Hauptwelle 35, vgl. Fig. 1, ist die Kurvenscheibe 36 zentriert, ebenso eine Zahnscheibe 34, welche mit einem Zahnriemen 33 mit einer weiteren Zahnscheibe 32 eines Elektromotors 31 in Wirkverbindung steht. Die Zahnscheibe 32 weist 36 Zähne, die Zahnscheibe 34 deren 144 auf, was ein Übersetzungsverhältnis von etwa 1 : 4 ergibt. - Die Kurvenscheibe 36 ist in ihrer hebelseitigen Ausnehmung in einer Andruckrolle 37 eingerastet und wird bei Beginn der Anfahrphase durch eine Wippe 38 in Drehrichtung D durch einen Pneumatikzylinder 40 mit seinem Flansch 39 beschleunigt. Im Pneumatikzylinder 40 wirkt ein, im Maschinengestell 14 in an sich bekannter Weise erzeugter Luftdruck p, der einen Kolben 41 beaufschlagt, welcher seinerseits über eine Kolbenstange 42 mit einer Kraft P auf ein zweites Gelenk 44 der Wippe 38 einwirkt (Lage 44'). Die Wippe 38 weist auch ein erstes Gelenk 43 auf. Das zusammengepresste Medium 45 befindet sich unter dem Kolben 41.

Die Wirkungsweise der Prüfeinrichtung Fig. 2 bis Fig 4 ist folgende:

Der Prüfling 24 (Raketenspitze mit Steuerelektronik und Kriegskopf) wird auf dem Objektträger 23 installiert (Fig. 2) und mit sämtlichen Speise-, Steuer- und Messleitungen mit einer Instrumenten- und Auswertezentrale elektrisch verbunden. Signalisiert der Prüfling 24 Betriebsbereitschaft, so wird der in diesem Beispiel pneumatische Druck p des Mediums 45 so lange gesteigert, bis die am Messwertaufnehmer 26' (Piezogeber) angezeigte Zugspannung ihren Sollwert erreicht. Ist dieser Sollwert erreicht, wird in an sich bekannter Weise durch einen Elektromagneten der Verbindungsbolzen durch das Auslöseseil 28 aus einer Seilkupplung 26'' herausgezogen; die Kraft P dreht die Wippe 38 in ihrem zweiten Gelenk 44 schlagartig und bewirkt eine impulsartige Beschleunigung des Rotors 1 und damit des Prüflings 24 auf seiner Kreisbahn K (Fig. 4). Gleichzeitig mit der Auslösung des die Seilkupplung 26'' steuernden Elektromagneten wird der Elektromotor 31 (handelsüblicher Servomotor mit geringer Massenträgheit und hohem Losbrechmoment) gestartet, so dass dieser die impulsartig erreichte Drehgeschwindigkeit des Rotors 1 stationär hält.

Mit dem Einsetzen der Beschleunigung $A_0$ wird der Prüfling 24 durch den an der Steuerkurve 22 mit Hilfe des Gleitschuhs 22' geführten Schlepphebel 24' (Fig. 4) mit seiner Spitze stetig gegen das Rotationszentrum der Prüfeinrichtung, die Hauptwelle 35 (Fig. 1), gedreht. Mit der Geometrie von Fig. 1 ergibt sich für die Steuerkurve 22 eine Epizykloide, diejenige Kurve, welche ein fester Punkt des abrollenden, im Prüfling 24 zentrierten Kreises mit dem Radius R/3 beschreibt.

Die vorgängig beschriebene Prüfeinrichtung ist in Leichtbauweise hergestellt und wiegt mit den hydraulischen Hilfsapparaten 500 kg. Sie erlaubt Prüflinge mit Massen bis 6,0 kg mit 300 m/s² zu beschleunigen. Der Beschleunigungsanstieg beträgt 15 g/40 ms auf einem Radius des Rotors von 2,5 m; der Rotor weist im stationären, spezifischen Test-Betrieb eine Drehzahl von 75 1/min auf und kann zwischen 0 bis 300 1/min beliebig vorgewählt werden. Die Schubenergie am Pneumatikzylinder 40 beträgt bei einem Pneumatikdruck von 5 bar zirka 3000 J. Der Elektromotor weist eine Wellenleistung von 4,5 kW auf.

Fig. 4 zeigt die konstruktive Ausgestaltung der Drehung des Prüflings 24 um sein Zentrum. Ein Schlepphebel 24' (siehe auch Detail in der Fig. 5) ist mit dem Prüfling 24 so verbunden, dass er mit dessen Achse L ständig einen rechten Winkel einschliesst. Sein anderes Ende ist über einen Drehbolzen 22″ mit einem Gleitschuh 22' mechanisch verbunden, wobei dieser Gleitschuh 22' entlang der Steuerkurve 22 geführt wird. Somit dreht sich der Prüfling 24 aus seiner Startposition I, d.h. die Achse L bildet eine Tangente T zur Kreisbahn K. Am Ende IV der Anfahrphase schliesst die Achse L mit der Tangenten T einen rechten Winkel ein.

Das Detail gemäss Fig. 5 zeigt einen Teil der Steuerkurve 22, die in diesem Beispiel als eine Schiene ausgebildet ist. Der Schlepphebel 24', der fest mit dem Prüfling 24 verbunden ist, kann sich um den Drehbolzen 22″ des Gleitschuhes 22' drehen, weil der Winkel des Schlepphebels 24' mit der Tangente der Steuerkurve 22 veränderlich ist.

Die mit dieser Anlage gemessenen Beschleunigungswerte sind der Fig. 6, einem Beschleunigungs-Zeit-Diagramm, zu entnehmen und entsprechen einem Prüf-Programm für Raketenspitzen, welches früher nur durch reale Abschüsse zu erfüllen war. Der militärische Kriegskopf lässt sich zudem in einer im Schutzrohr 29, in dessen Detonationsraum 30 (Fig. 2), installierten Prallplatte inklusive dessen Zündkette testen. Im Diagramm gemäss dieser Fig. 6 sind zwei Kurven für die Abhängigkeit der Beschleunigung A von der Zeit t dargestellt. Die Kurve A0 entspricht einem Radius $R = 1$ m, die zweite Kurve $A_0'$ einem Radius $R = 2,5$ m. Aus dem Dargestellten ist ersichtlich, dass die Anstiegzeit $t_1$ der Beschleunigung 5 ms beträgt. Der Abschluss der 45°-Anfahrphase findet beim Radius $R = 1$ m bei $t_2 = 168$ ms, beim Radius $R = 2,5$ m und obigen Beschleunigung beim $t'_2 = 206$ ms statt. Mit $t_3$ ist ein beliebiger Zeitpunkt in reiner Zentrifugenbewegung bezeichnet.

Selbstverständlich ist der Erfindungsgegenstand nicht auf das beschriebene Ausführungsbeispiel beschränkt; es lassen sich beispielsweise durch eine geeignete Formgebung der Steuerkurve 22 in weiten Grenzen beliebige Beschleunigungs- und Verzögerungscharakteristiken für Prüflinge verschiedenster Massen und Grössenverhältnisse realisieren.

Durch den Einbezug von faserverstärkten Kunststoffen als Konstruktionsmaterialien lassen sich auch beträchtlich höhere Endbeschleunigungen erreichen. Ebenso können durch die Zuführung der elektrischen Verbindungen über Schleifringe und/oder induktive Übertragungselemente stationäre Dauerprüfungen und/oder wechselnde Beschleunigungsprogrammme gefahren werden. Aus kinetischen Gründen empfiehlt es sich, in solchen Fällen einen Gegenrotor und/oder Gegengewichte zur Rotor- und Prüflingsmasse vorzusehen.

Der Erfindungsgegenstand dient der Prüfung von zivilen und militärischen Objekten und kann auch für verfahrenstechnische und biologische Tests verwendet werden. Er zeichnet sich gegenüber Linearbeschleunigungsanlagen gleicher oder ähnlicher Leistung durch seine hohe Wirtschaftlichkeit sowohl bei der Erstellung als auch in Betrieb aus.

## Patentansprüche

1. Verfahren zum kontrollierten Aufbau einer vorgegebenen Beschleunigung an einem Prüfling auf einer Kreisbahn, wobei die Beschleunigungsrichtung zumindest während der Anfahrphase bezüglich des Prüflings konstant ist, dadurch gekennzeichnet, dass der Prüfling (24) im Bereich seines Beschleunigungszentrums um wenigstens 90 Grad, senkrecht zur Tangentialrichtung seiner Kreisbahn (K), gedreht wird und dass zu Beginn der Anfahrphase der Drehbewegung (D) in der Kreisbahn (K) der Prüfling (24) in seiner Längsachse (L) tangential zur Kreisbahn (K) ausgerichtet wird und dass während der Anfahrphase der Prüfling (24) mit seiner Längsachse (L) gegen den Mittelpunkt (35) der Kreisbahn (K) gedreht wird und dass dieser Prüfling (24) nach einem vorgegebenen Rotationswinkel ($\phi$) auf der Kreisbahn (K) mit seiner Längsachse (L) radial zum Mittelpunkt (35) der Kreisbahn (K) ausgerichtet wird und in dieser Lage eine stationäre Drehphase erfährt.

2. Verfahren nach Anspruch 1, dadurch gekennzeichnet, dass die Beschleunigung ($A_0$) des Prüflings (24) in bezug auf sein Zentrum rechteckförmig erfolgt und dass der Prüfling (24) nach einem Rotationswinkel ($\psi$) von 45 Grad ($\pi/4$) auf der Längsachse (L) radial zum Mittelpunkt (35) der Kreisbahn (K) ausgerichtet wird.

3. Verfahren nach Anspruch 2, dadurch gekennzeichnet, dass der Drehwinkel ($\psi$) des Prüflings (24) relativ zum Radius (R) der Kreisbahn (K) gewählt wird und dass folgende Beziehung gilt:

$$\psi = \arctan\left(\frac{A_r}{A_t}\right) = \arctan\left(\frac{R\, A_o \sin 2\phi}{R\, A_o \cos 2\phi}\right) = 2\,\phi$$

mit $A_t$ = R $\dot{\omega}$ und $A_r$ = R $\omega^2$

wobei $\omega$ der Winkelgeschwindigkeit des Prüflings (24) auf seiner Kreisbahn (K) entspricht und $\dot{\omega}$ dessen Winkelbeschleunigung, $A_0$ dem Betrage der konstanten Sollbeschleunigung für die Zeit t> 0, $A_t$ dem Betrag der Tangentialkomponente und $A_r$ dem der Radialkomponente des Beschleunigungsvektors im Beschleunigungszentrum des Prüflings (24) entspricht.

4.  Vorrichtung zur Beschleunigung eines Prüflings (24) auf einer Kreisbahn (K) mit einem Rotor (1), an dem ein Objektträger (23) zur Aufnahme des Prüflings befestigt ist, mit Antriebsmitteln (31) zum Drehen des Rotors, dadurch gekennzeichnet, dass ein Druckmedium (45) zum Antrieb des Rotors (1) in seiner Anfahrphase, eine Steuerkurve (22) zum Drehen des Prüflings (24) im Bereich seines Beschleunigsungszentrums um wenigstens 90° senkrecht zur Tangentialrichtung seiner Kreisbahn (K) vorgesehen sind, und dass ferner an dieser Steuerkurve (22) ein Schlepphebel (24') auf einem Gleitschuh (22') befestigt zur Führung des Prüflings (24) vorgesehen ist.

5.  Vorrichtung nach Anspruch 4, dadurch gekennzeichnet, dass ein Druckkolben (41) am Untersetzungshebel einer Wippe (38) angreift und dass diese Wippe (38) starr mit der Basis des Rotors (1) verbunden ist.

6.  Vorrichtung nach Anspruch 4, dadurch gekennzeichnet, dass der Rotor (1) mit einem Elektromotor (31) in Wirkverbindung steht, und dass dieser Elektromotor (31) zum Übernehmen der Drehbewegung (D) der Anfahrphase bestimmt ist.

7.  Vorrichtung nach Anspruch 6, dadurch gekennzeichnet, dass die Wirkverbindung zwischen dem Rotor (1) und dem Elektromotor (31) über einen Zahnriemen (33) erfolgt.

8.  Vorrichtung nach Anspruch 4, dadurch gekennzeichnet, dass sich eine Steuerkurve (22) über wenigstens einen Drittel des Radius (R) der Kreisbahn (K) erstreckt.

9.  Verwendung der Vorrichtung nach Anspruch 4 zur Prüfung von mechanischen, elektrischen und elektromechanischen Bauelementen und elektronischen Geräten.

10. Verwendung der Vorrichtung nach Anspruch 4 zur Prüfung von Raketenspitzen und deren Sicherheitselementen.


**Claims**

1.  A method for the controlled build-up of a preset acceleration on a test sample in orbit, wherein the acceleration direction is constant in relation to the test sample at least during the starting phase, characterised in that the test sample (24) is rotated in the region of its centre of acceleration by at least 90 degrees, perpendicularly to the tangential direction of its orbit (K), and in that at the beginning of the starting phase of the rotational movement (D) in the orbit (K), the longitudinal axis (L) of the test sample (24) is aligned tangentially to the orbit (K), and in that during the starting phase the longitudinal axis (L) of the test sample (24) is rotated towards the centre (35) of the orbit (K), and in that the longitudinal axis (L) of this test sample (24) is aligned according to a preset angle of rotation ($\phi$) in the orbit (K) radially in relation to the centre (35) of the orbit (K) and in this position the said test sample undergoes a stationary rotational phase.

2.  A method according to claim 1, characterised in that the acceleration ($A_0$) of the test sample (24) in relation to its centre occurs rectangularly, and in that the test sample (24) is aligned in accordance with an angle of rotation ($\psi$) of 45 degrees ($\pi$ /4) on the longitudinal axis (L) radially in relation to the centre (35) of the orbit (K).

3.  A method according to claim 2, characterised in that the angle of rotation ($\psi$) of the test sample (24) relative to the radius (R) of the orbit (K) is selected and in that the following equation applies:

$$\psi = \arctan\left(\frac{A_r}{A_t}\right) = \arctan\left(\frac{R\,A_o\sin2\phi}{R\,A_o\cos2\phi}\right) = 2\,\phi$$

where $A_t = R \dot{\omega}$ and $A_r = R \omega^2$

in which $\omega$ equals the angular velocity of the test sample (24) in its orbit (K) and $\dot{\omega}$ equals its angular acceleration, $A_0$ equals the value of the constant nominal acceleration for the time t>0, $A_t$ the value of the tangential component and $A_r$ that of the radial component of the acceleration vector in the centre of acceleration of the test sample (24).

4. A device for accelerating a test sample (24) on an orbit (K) comprising a rotor (1), to which an object carrier (23) is secured for holding the test sample, comprising drive means (31) for turning the rotor, characterised in that a pressure medium (45) for driving the rotor (1) in its starting phase [and] a cam (22) for rotating the test sample (24) in the region of its centre of acceleration by at least 90° perpendicularly to the tangential direction of its orbit (K) are provided, and in that further a drag lever (24') secured on a sliding shoe (22') is provided on this cam (22) for guiding the test sample (24).

5. A device according to claim 4, characterised in that a pressure piston (41) acts on the step-down gear lever of a rocker (38), and in that this rocker (38) is rigidly connected to the base of the rotor (1).

6. A device according to claim 4, characterised in that the rotor (1) is in operative connection with an electric motor (31), and in that this electric motor (31) is intended for taking over the rotational movement (D) of the starting phase.

7. A device according to claim 6, characterised in that the operative connection between the rotor (1) and the electric motor (31) is effected by way of a toothed belt (33).

8. A device according to claim 4, characterised in that a cam (22) extends over at least a third of the radius (R) of the orbit (K).

9. The use of the device according to claim 4 for testing mechanical, electrical and electromechanical components and electronic devices.

10. The use of the device according to claim 4 for testing the nose cones of rockets and the safety elements thereof.

**Revendications**

1. - Procédé pour l'application contrôlée d'une accélération prédéterminée à une éprouvette sur une orbite circulaire, la direction de l'accélération par rapport à l'éprouvette étant maintenue constante au moins pendant la phase de démarrage, **caractérisé en ce** que l'éprouvette (24) est tournée d'au moins 90 degrés dans la région de son centre d'accélération, perpendiculairement à la direction tangentielle de son orbite circulaire (K), que, au début de la phase de démarrage du mouvement de rotation (D) dans l'orbite circulaire (K), l'axe longitudinal (L) de l'éprouvette (24) est orienté tangentiellement à l'orbite circulaire (K), que pendant la phase de démarrage, l'axe longitudinal (L) de l'éprouvette (24) est tourné vers le centre (35) de l'orbite circulaire (K), et que l'axe longitudinal (L) de ladite éprouvette (24) est orienté radialement vers le centre (35) de l'orbite circulaire (K) après un angle de rotation ($\phi$) prédéterminé sur l'orbite circulaire (K) pour subir dans cette position une phase de rotation stationnaire,

2. - Procédé selon la revendication 1, caractérisé en ce que l'accélération ($A_0$) de l'éprouvette (24) par rapport à son centre se fait sous une forme rectangulaire et que l'axe longitudinal (L) de l'éprouvette (24) est orienté radialement vers le centre (35) de l'orbite circulaire (K) après un angle de rotation ($\psi$) de 45° ($\Pi/4$).

3. - Procédé selon la revendication 2, caractérisé en ce que l'angle de rotation ($\psi$) de l'éprouvette (24) est choisi en fonction du rayon (R) de l'orbite circulaire (K) et que la relation suivante est applicable :

$$\psi = \arctan\left(\frac{A_r}{A_t}\right) = \arctan\left(\frac{R\ A_0\ \sin 2\Phi}{R\ A_0\ \cos 2\Phi}\right) = 2\ \Phi$$

avec $A_t = R\ \dot{\omega}$ et $A_r = R\ \omega^2$,

correspondant à la vitesse angulaire de l'éprouvette {24} sur son orbite circulaire (K) et $\dot{\omega}$ à son accélération angulaire, $A_0$ indiquant la valeur de l'accélération théorique constante pour le temps t > 0, $A_t$ étant la valeur de la composante tangentielle et A, celle de la composante radiale du vecteur d'accélération au centre d'accélération de l'éprouvette (24).

4. - Dispositif pour l'accélération d'une éprouvette (24) sur une orbite circulaire (K), comprenant un rotor (1) sur lequel est fixé un porte-objet (23) pour la réception de l'éprouvette, des moyens d'entraînement (31) pour la mise en rotation du rotor, caractérisé en ce qu'il comprend un fluide sous pression (45) pour l'entraînement du rotor (1) dans sa phase de démarrage, une came de commande (22) pour la rotation de l'éprouvette (24) d'au moins 90° dans la région de son centre d'accélération, perpendiculairement à la direction tangentielle de son orbite circulaire (K), et que sur cette came de commande (22) est prévu en outre un levier d'entraînement (24') fixé sur un patin de guidage (22') et destiné au guidage de l'éprouvette (24).

5. - Dispositif selon la revendication 4, caractérisé en ce qu'un piston de pression (41) agit sur le levier de démultiplication d'une bascule (38) et que ladite bascule (38) est solidaire de la base du rotor (1).

6. - dispositif selon la revendication 4, caractérisé en ce que le rotor (1) coopère avec un moteur électrique (31), et que ledit moteur électrique (31) est destiné à assurer le mouvement de rotation (D) de la phase de démarrage.

7. - dispositif selon la revendication 6, caractérisé en ce que la coopération entre le rotor (1) et le moteur électrique (31) se fait par l'intermédiaire d'une courroie dentée (33).

8. - Dispositif selon la revendication 4, caractérisé en ce que la came de commande (22) s'étend sur au moins un tiers du rayon (R) de l'orbite circulaire (K).

9. - Utilisation du dispositif selon la revendication 4 pour l'essai d'éléments mécaniques, électriques et électromécaniques ainsi que d'appareils électroniques.

10. - Utilisation du dispositif selon la revendication 4 pour l'essai d'ogives de fusées et de leurs éléments de sécurité.

Fig.1

Fig.2

Fig. 3

Fig.4

Fig.5

Fig.6